# EUROPÄISCHE PATENTANMELDUNG

(11) **EP 1 106 801 A2**
(43) Veröffentlichungstag der Anmeldung: **13.06.2001**
(21) Anmeldenummer: 00125943.1
(22) Anmeldetag: 28.11.2000
(51) Int. Cl.: F01N 3/28

(54) **Abgasreinigungsvorrichtung**

(30) Priorität: 08.12.1999 DE 19959241
(71) Anmelder: ZEUNA-STÄRKER GMBH & CO KG, 86154 Augsburg (DE)
(72) Erfinder: Schmidt, Stefan, 86154 Augsburg (DE); Winter, Michael, 86641 Rain (DE)
(74) Vertreter: Grättinger & Partner (GbR)

(57) **Zusammenfassung**

Eine Abgasreinigungsvorrichtung in Stopfbauweise für ein durch einen Verbrennungsmotor angetriebenes Kraftfahrzeug umfaßt ein Gehäuse und mindestens einen darin unter Zwischenschaltung einer Lagerungsmatte (2) gelagerten Abgasreinigungskörper (3), wobei das Gehäuse einen Lagerabschnitt (1) in Form eines im wesentlichen zylindrischen Rohrabschnitts aufweist. Der Lagerabschnitt (1) des Gehäuses weist mindestens eine sich in Umfangsrichtung erstreckende, nach innen gerichtete Sicke (4) auf, die außerhalb des von der Lagerungsmatte (2) bedeckten Bereichs benachbart der zuströmseitigen Stirnkante (5) der Lagerungsmatte (2) angeordnet ist.

## Beschreibung

Die vorliegende Erfindung betrifft eine Abgasreinigungsvorrichtung in Stopfbauweise für ein durch einen Verbrennungsmotor angetriebenes Kraftfahrzeug, umfassend ein Gehäuse und mindestens einen darin unter Zwischenschaltung einer Lagerungsmatte gelagerten Abgasreinigungskörper, wobei das Gehäuse einen Lagerabschnitt in Form eines im wesentlichen zylindrischen Rohrabschnitts aufweist.

Für Abgasreinigungsvorrichtungen der gattungsgemäßen Art, die bei Verwendung katalytisch wirkender Abgasreinigungskörper auch als Rohrkatalysatoren oder Stopfkatalysatoren bezeichnet werden, bilden beispielsweise die EP 0703354 A2, EP 0681095 A1, DE 19714851 C1 und DE 4111264 A1 einen einschlägigen Stand der Technik. Jeweils wird der mindestens eine Abgasreinigungskörper mitsamt der ihn umgebenden Lagerungsmatte axial in den als Lagerabschnitt dienenden Rohrabschnitt eingepreßt, bevor das Gehäuse geschlossen wird, indem ein oder zwei Übergangstrichter an den Rohrabschnitt angeschweißt werden. Neben katalytischen Abgasreinigungsvorrichtungen, die katalytisch beschichtete, wabenartig strukturierte Abgasreinigungskörper aufweisen, zählen auch Ruß- bzw. Partikelfilter zu den eingangs genannten Abgasreinigungsvorrichtungen. Die Stopftechnik hat dabei gegenüber der früher weit verbreiteten Halbschalenbauweise den Vorteil eines reduzierten Fertigungsaufwandes sowie der Möglichkeit zur Modulbauweise. Allerdings gibt es für einen wirksamen Schutz der Stirnkanten der Lagerungsmatte gegen Ausblasen durch das pulsierende Abgas noch keine optimale Lösung.

Vor diesem Hintergrund liegt der vorliegenden Erfindung die Aufgabe zugrunde, eine Abgasreinigungsvorrichtung der gattungsgemäßen Art zu schaffen, bei der sich mit geringem Aufwand ein wirksamer Schutz der Stirnkanten der Lagerungsmatte gegen Ausblasen bzw. Erosion erreichen läßt.

Gemäß der vorliegenden Erfindung wird diese Aufgabe dadurch gelöst, daß der Lagerabschnitt des Gehäuses mindestens eine sich in Umfangsrichtung erstreckende, nach innen gerichtete Sicke aufweist, die außerhalb des von der Lagerungsmatte bedeckten Bereichs benachbart der zuströmseitigen Stirnkante der Lagerungsmatte angeordnet ist. Dem Schutz der zuströmseitigen Stirnkante der Lagerungsmatte gegen Ausblasen bzw. Erosion durch pulsierendes Abgas dient somit mindestens eine in das Gehäuse eingeprägte, nach innen gerichtete Sicke. Diese kann, sofern der mindestens eine Abgasreinigungskörper von der Abströmseite her in den Rohrabschnitt eingepreßt wird, bereits vorher in diesen eingebracht sein. Besonders bevorzugt wird/werden die Sicke(n) jedoch in den Rohrabschnitt eingebracht, nachdem der mindestens eine Abgasreinigungskörper eingepreßt worden ist. Hierfür eignet sich insbesondere die sog. Spun-Technik oder ein entsprechendes Verfahren. Insoweit läßt sich in Anwendung der vorliegenden Erfindung mit minimalem Aufwand ein wirksamer Schutz der Stirnkante der Lagerungsmatte gegen Ausblasen bzw. Erosion erreichen. Besonders bevorzugt ist sowohl zuströmseitig wie auch abströmseitig mindestens eine derartige Sicke vorgesehen, um auch abströmseitig einen entsprechenden Kantenschutz bereitzustellen. Zudem tragen die Sicken zu einer Fixierung der Lagerungsmatte innerhalb des Gehäuses bei, ohne dabei eine nachteilige punktuell oder linienförmig erhöhte Preßkraft auf die Umfangsfläche des Abgasreinigungskörpers auszuüben. Im Ergebnis wird dadurch die Gefahr, daß sich der Abgasreinigungskörper durch mechanische Erschütterungen und sonstige Betriebseinflüsse innerhalb des Gehäuses in Längsrichtung verschiebt, reduziert, ohne daß der Abgasreinigungskörper seine Lebensdauer beeinträchtigenden ungleichförmigen Druckverhältnissen ausgesetzt wäre. Namentlich der besonders empfindliche Randbereich des Abgasreinigungskörpers wird in Anwendung der vorliegenden Erfindung nicht verstärkten mechanischen Belastungen ausgesetzt.

Eine erste bevorzugte Weiterbildung der Erfindung zeichnet sich dadurch aus, daß sich die mindestens eine Sicke im wesentlichen über den gesamten Umfang des Lagerabschnitts des Gehäuses erstreckt. Durch eine entsprechende ringförmig geschlossene Sicke ergibt sich ein maximaler Schutz der Stirnkanten der Lagerungsmatte gegen Ausblasen bzw. Erosion.

Eine wiederum andere bevorzugte Weiterbildung der Erfindung zeichnet sich dadurch aus, daß die Lagerungsmatte in axialer Richtung eine geringere Erstreckung aufweist als der mindestens eine Abgasreinigungskörper. Dabei ist die mindestens eine Sicke bevorzugt so angeordnet, daß sie den Randbereichen der Umfangsfläche des mindestens einen Abgasreinigungskörpers gegenübersteht. Auch diese Gestaltung trägt zu einem besonders wirksamen Schutz der Stirnkante(n) der Lagerungsmatte gegen Ausblasen bzw. Erosion und zugleich einer mechanischen Schonung der empfindlichen Randbereiche der Abgasreinigungskörper bei.

Die für einen wirksamen Kantenschutz günstige Höhe der mindestens einen Sicke hängt von verschiedenen Faktoren ab, beispielsweise den spezifischen Strömungsverhältnissen. Bei durchschnittlichen Verhältnissen beträgt die Höhe der mindestens einen Sicke bevorzugt mindestens 50 %, besonders bevorzugt mindestens 70 % der Dicke der Lagerungsmatte. Auch dieses Merkmal trägt wiederum dazu bei, daß die eingangs angegebene Zielsetzung in besonders ausgeprägter Weise erreicht wird.

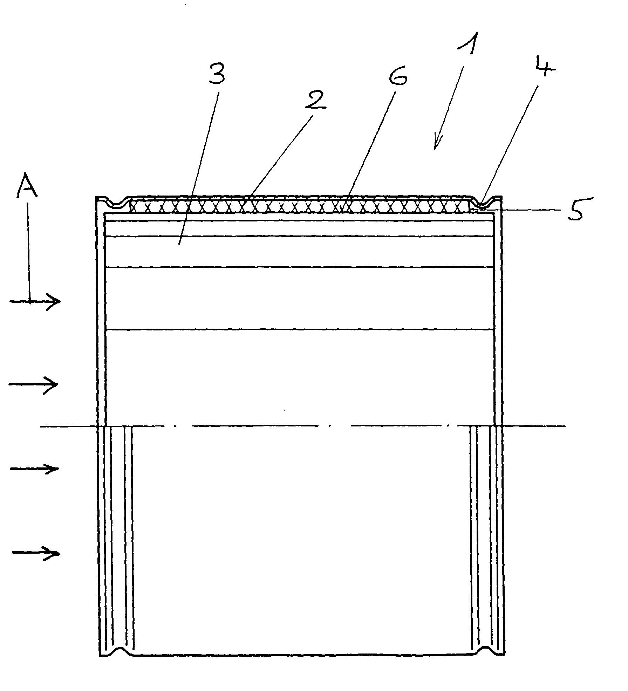

Im folgenden wird die vorliegende Erfindung anhand eines in der Zeichnung dargestellten bevorzugten Ausführungsbeispiels näher erläutert. Diese zeigt in teilweise geschnittener Seitenansicht das Mittelteil einer katalytischen Abgasreinigungsvorrichtung nach der vorliegenden Erfindung.

Das Gehäuse der in der Zeichnung veranschaulichten katalytischen Abgasreinigungsvorrichtung besteht aus einem Lagerabschnitt 1 und zwei (nicht dargestellten) stirnseitig mit diesem verbundenen, insbesondere verschweißten Trichtern. In dem aus einem Rohrabschnitt bestehenden Lagerabschnitt 1 des Gehäuses ist unter Zwischenschaltung einer als Lagerungsmatte 2 dienenden Quellmatte ein als axial durchströmter (Pfeil A) Katalysatorkörper ausgebildeter Abgasreinigungskörper 3 gelagert. Der Katalysatorkörper ist dabei von zylindrischer Form, wobei sein Querschnitt in Anpassung an die Einbauverhältnisse rund, oval, dreieckig oder in sonstiger geeigneter Weise ausgeführt sein kann. Entsprechend ist auch der Lagerabschnitt 1 des Gehäuses im wesentlichen zylindrisch mit einem runden, ovalen, dreieckigen bzw. sonstigen Querschnitt.

In dem vorstehend dargelegten Umfang entspricht die in der Zeichnung dargestellte Abgasreinigungsvorrichtung dem hinlänglich bekannten Stand der Technik, so daß an dieser Stelle auf weitere Erläuterungen verzichtet wird. In den Lagerabschnitt 1 des Gehäuses der Abgasreinigungsvorrichtung sind nach dem Einpressen des Katalysatorkörpers zwei Sicken 4 eingeprägt worden. Diese erstrecken sich in Umfangsrichtung, und zwar über den gesamten Umfang des Lagerabschnitts des Gehäuses. Sie sind radial nach innen gerichtet. Ihre Höhe beträgt etwa 70 % der Dicke der Quellmatte.

Die axiale Länge der Quellmatte ist geringer als der axiale Abstand zwischen den beiden Sicken 4. Auf diese Weise liegt die Quellmatte zwischen den beiden Sicken 4; letztere sind, mit anderen Worten, außerhalb des von der Quellmatte bedeckten Bereiches benachbart den Stirnkanten 5 der Quellmatte angeordnet.

Die axiale Länge des Katalysatorkörpers übersteigt wiederum beträchtlich die axiale Länge der Lagerungsmatte 2. Auf diese Weise steht der Katalysatorkörper auf beiden Seiten über die Stirnkanten 5 der Quellmatte über. Dementsprechend stehen die Sicken 4 den Randbereichen der Umfangsfläche 6 des Katalysatorkörpers gegenüber. Auf diese Weise verbleibt zwischen der Umfangsfläche 6 des Katalysatorkörpers einerseits und den beiden Sicken 4 im Bereich ihres jeweiligen Scheitels andererseits lediglich ein relativ schmaler Spalt, durch welchen Abgaspulsationen in einem solchen Maße gedrosselt werden, daß eine Erosion der Quellmatte weitestgehend ausgeschlossen ist.

## Patentansprüche

1. Abgasreinigungsvorrichtung in Stopfbauweise für ein durch einen Verbrennungsmotor angetriebenes Kraftfahrzeug, umfassend ein Gehäuse und mindestens einen darin unter Zwischenschaltung einer Lagerungsmatte (2) gelagerten Abgasreinigungskörper (3), wobei das Gehäuse einen Lagerabschnitt (1) in Form eines im wesentlichen zylindrischen Rohrabschnitts aufweist,
dadurch gekennzeichnet,
daß der Lagerabschnitt (1) des Gehäuses mindestens eine sich in Umfangsrichtung erstreckende, nach innen gerichtete Sicke (4) aufweist, die außerhalb des von der Lagerungsmatte (2) bedeckten Bereichs benachbart der zuströmseitigen Stirnkante (5) der Lagerungsmatte (2) angeordnet ist.

2. Abgasreinigungsvorrichtung nach Anspruch 1,
dadurch gekennzeichnet,
daß sich die mindestens eine Sicke (4) im wesentlichen über den gesamten Umfang des Lagerabschnitts (1) des Gehäuses erstreckt.

3. Abgasreinigungsvorrichtung nach Anspruch 1 oder Anspruch 2,
dadurch gekennzeichnet,
daß die Lagerungsmatte (2) in axialer Richtung eine geringere Erstreckung aufweist als der mindestens eine Abgasreinigungskörper (3).

4. Abgasreinigungsvorrichtung nach Anspruch 3,
dadurch gekennzeichnet,
daß die mindestens eine Sicke (4) dem zugeordneten Randbereich der Umfangsfläche (6) des mindestens einen Abgasreinigungskörpers (3) gegenübersteht.

5. Abgasreinigungsvorrichtung nach einem der Ansprüche 1 bis 4,
dadurch gekennzeichnet,
daß die Höhe der mindestens einen Sicke (4) mindestens 50% der Dicke der Lagerungsmatte (2) beträgt.

6. Abgasreinigungsvorrichtung nach einem der Ansprüche 1 bis 5,
dadurch gekennzeichnet,
daß die mindestens eine Sicke (4) so angeordnet ist, daß sie an der zuströmseitigen Stirnkante (5) der Lagerungsmatte (2) ausläuft.

7. Abgasreinigungsvorrichtung nach einem der Ansprüche 1 bis 6,
dadurch gekennzeichnet,
daß zuströmseitig und abströmseitig jeweils eine Sicke (4) vorgesehen ist.

8. Abgasreinigungsvorrichtung nach einem der Ansprüche 1 bis 7,
dadurch gekennzeichnet,
daß die mindestens eine Sicke (4) nach dem Einpressen des mindestens einen Abgasreinigungskörpers (3) in den Lagerabschnitt (1) eingebracht worden ist.
